# EUROPEAN PATENT APPLICATION

(11) **EP 4 836 509 A1**
(43) Date of publication of application: **04.11.2026**
(21) Application number: 25174104.7
(22) Date of filing: 02.05.2025
(51) Int. Cl.: H04W 24/10, H04W 36/30

(54) **CONNECTION MEASURES**

(71) Applicant: Vodafone Group Services Limited, Newbury RG14 2FN (GB)
(72) Inventor: KULAKOV, Alexey, London, W2 6BY (GB); MARTINS, Diogo, London, W2 6BY (GB); PUDNEY, Christopher, London, W2 6BY (GB)
(74) Representative: Boult Wade Tennant LLP

(57) **Abstract**

There is provided a method for determining connection measurement information for use in a connection between a user equipment, UE, and a network comprising communicating, from the network to the UE, a release message configured to instruct the UE to enter a low power state; and communicating a validation signal from the UE to the network, wherein the validation signal indicates whether connection measurement information from a first connection is valid for a second connection. There is also provided a UE configured to perform the method, and a computer program.

## Description

### FIELD

Aspects of the present disclosure relate to wireless communications, and more particularly, to techniques for handling connection measurements between a UE and network.

### BACKGROUND

In cellular communication networks, such as LTE and 5G NR, Radio Resource Control (RRC) is a protocol that controls the physical layer. The network uses RRC to establish, maintain and release connections between a base station (BS) and user equipment (UE). In the connected mode, the UE receives configuration information from the base station and reports measurements to the BS. After the RRC connection is established between the UE and BS, the network and UE perform security procedures using parameters from a previous mutual authentication procedure. Once the security is established, the network may configure the UE to provide measurements to the BS, so that the BS may take the UE's radio environment into account. This information on the UE's radio environment enables the base station to accurately set up carrier aggregation and/or dual connectivity, or perform Handover procedures.

Carrier Aggregation and Dual Connectivity enable efficient load sharing between different frequency bands, and, by the ability to transfer data faster, enable better statistical multiplexing (and hence better system capacity). Fast activation of Carrier Aggregation and/or Dual Connectivity is highly beneficial as many data transfers are relatively small and will overload the primary carrier if activation is slow.

Handover procedures are important for maintaining the connection of the UE to the network as the UE moves across different cell areas. During an RRC connection, the UE performs connection measurements on the serving and neighbouring cells. These measurements are transmitted to the serving base station, and the serving base station may decide whether a handover is required to improve the connection of the UE to the network. If a handover is required, the UE is instructed to switch to the neighbouring ("target") cell, via an RRC connection reconfiguration message. The UE will send a message to the new cell once the transition is complete.

It is in this context that the subject matter contained in the present application has been devised.

### SUMMARY

The first aspect communicates from the UE to the network whether connection measurement information from a first connection is valid for a second connection. This has the advantage that it can be determined whether the measurements from a first connection could be reused for a second connection. Therefore, the network is able to take action more quickly, for example if it is known from the measurements that the connection quality is low, it is possible to activate a handover. Another example is that if the first connection successfully used dual connectivity or carrier aggregation to improve the UE's connection the network, then the network might activate dual connectivity or carrier aggregation sooner. Therefore, the first aspect improves the connectivity of the UE to the network, in particular by reducing the likelihood of a connection dropping due to loss of coverage on that frequency band, and reducing delays before carrier aggregation or dual connectivity can be activated.

In particular, the first aspect comprises a method for determining connection measurement information for use in a connection between a user equipment, UE, and a network comprising communicating, from the network to the UE, a release message configured to instruct the UE to enter a low power state; and communicating a validation signal from the UE to the network, wherein the validation signal indicates whether connection measurement information from a first connection is valid for a second connection.

In some examples, prior to communicating a validation signal, the method may comprise determining, at the UE, whether the connection measurement information from the first connection is valid for a second connection.

In some examples, the determining step may comprise comparing the connection measurement information, from the first connection, with one or more measurements from the low power state.

In some examples, the measurements made in the low power state may include one or more of: Reference Signal Received Power, RSRP; Reference Signal Received Quality, RSRQ; signal-to-noise ratio, SNR; and measurements indicative of the UE's location.

In some examples, the first connection measurement information may include one or more of: Reference Signal Received Power, RSRP; Reference Signal Received Quality, RSRQ; signal-to-noise ratio, SNR; and measurements indicative of the UE's location.

In some examples, some or all of the measurements measured during the low power state (which may be referred to herein as low power state measurements) may be statistically processed (e.g. averaged) prior to being compared to some (or all of) the first connection's measurement information.

In some examples, the release message may include indicating a time window, wherein measurements measured during the low power state and measured within the time window are averaged and used to determine whether the first set of communication measurement information is valid for a second connection. Therefore, the averaged measurements measured in the low power state may be compared to the first set of communication measurement information.

In some examples, the statistical information may be communicated to the UE, wherein the statistical information may include a limit on standard deviation, or other statistical parameters. Outside of the limit, the UE may determine that the first connection measurements are not valid for the second connection. The statistical information may be included in the release message.

In some examples, the release message may include information on a time period, such that the UE stores connection measurement information, of the first connection, made during that time period. In other words, a subset of the connection measurement information communicated from the UE to the network may be stored, wherein the subset of information is within a time window commanded by the network, or predetermined by UE configuration from 3GPP specifications.

In some examples, the release message may indicate the form of statistical processing for performing on the measurements, by the UE.

In some examples, the release message may indicate the mechanism by which the UE determines if measurements from the first connection are valid for use in the second connection

In some examples, the release message may instruct the UE as to which frequencies to store connection measurement information from. In some examples, the release message may indicate which frequencies the UE should store low power state measurements from.

In some examples, the release message may include a time duration for which the connection measurement information from the first connection is stored at the UE.
In some examples an identification number may be associated with the UE, and/or with the first connection measurement information. The identification number may be communicated to the UE within the release message.

In some examples, the identification number may be communicated from the UE to the network within the same signalling procedure as the validation signal such that the network can associate the validation signal with the connection measurement information from the first connection.

In some examples, the identification number is a Temporary Mobile Subscriber Identity (TMSI) or Radio Network Temporary Identifier (RNTI).

In some examples, the validation signal may be communicated from the UE to the network within any one of the following signalling : PRACH (Physical Random Access Channel) request; RRC Setup Request; RRC Setup Complete; or Security Mode Complete.

In some examples, if the connection measurement information from a first connection is valid for the second connection, the method may comprise communicating a mobility related configuration from the network to the UE.

In some examples, the mobility related configuration may comprise one or more of: instructions for configuring and/or activating carrier aggregation; instructions for configuring and/or activating dual connectivity; instructions for setup of conditional handover targets; a handover command for immediate handover.

In some examples, the low power state may be a state in which the UE is not connected. For example, the low power state may be an idle state or an inactive state.

In another aspect there is provided a user equipment, UE, configured to perform the method of any preceding claim.

In another aspect there is provided a computer program comprising instructions that, when executed on a processor, cause the processor to perform the method of any of the examples described herein.

### BRIEF DESCRIPTION OF DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. In the figures, each identical or nearly identical component that is illustrated in various figures is represented by a like numeral. For purposes of clarity, not every component may be labelled in every figure.
Figure 1 illustrates some elements of a telecommunications network.
Figure 2 illustrates a method as described herein.

The invention will now be described in relation to specific embodiments. The embodiments described herein are not intended to be limiting and are for illustrative purposes.

### DETAILED DESCRIPTION OF PREFERRED EMBODIMENTS

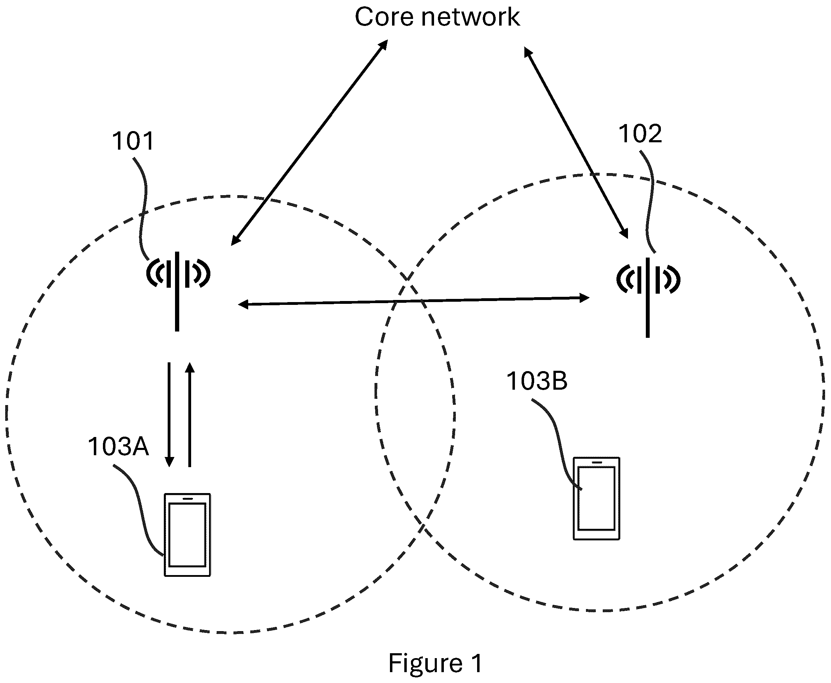

Figure 1 shows an example telecommunications system 100 comprising a first base station (BS) 101 ("source cell"), a second base station 102 ("target cell"), and one or more user equipment (UEs) 103. In this example, UE 103A is connected to the telecommunications network via the first base station. The first base station has a cell area within which the UE 103A is located. The second base station has a cell area which is different to the cell area of the first base station. The cell areas may be overlapping, or may be distinct. The first and second base stations are each connected to the core network. Therefore, the UEs are connected to the core network via one or more of the base stations. As will be described herein, if the location of the UE changes, the UE may connect to the network via a different base station.

As will be understood by the skilled person, the UE may be in a connected mode, or in a low power mode. Whilst in the low power mode, the UE may take measurements, such as measuring one or more of: Reference Signal Received Power (RSRP); Reference Signal Received Quality (RSRQ); and signal-to-noise ratio (SNR).

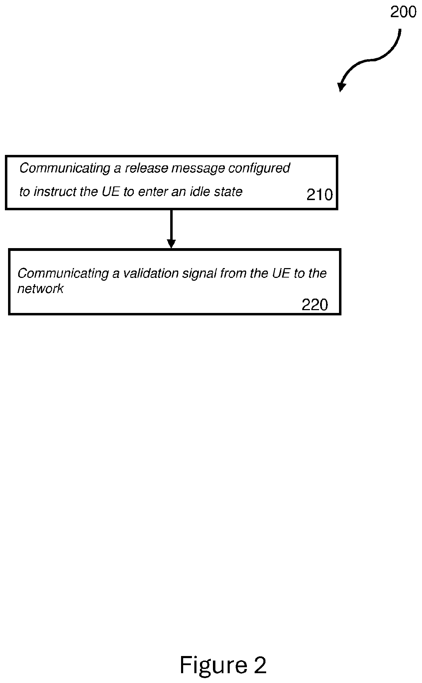

In order to improve the handling of a connection between the UE and the BS, the proposed method, as illustrated in figure 2, comprises in step 210 communicating from a network to the UE, a release message configured to instruct the UE to enter a low power state from a first connected state. The release message may be referred to as a connection release message. In step 220 the UE communicates a validation signal to the network. The validation signal indicates whether connection measurement information from a first connection is valid for initiating a second connection (e.g., the beginning of the second connection). The method may comprise indicating whether some or all of the connection measurement information from a first connection is valid for a second connection.It will be appreciated herein that the method may be described in relation to the connection between a UE and a network, wherein the UE may be connected to the network via one or more base stations.

An illustrative example will now be described, where it will be understood that methods may comprise some or all of the following steps without departing from the scope of the invention. The connection described in the examples herein may be an Radio Resource Control (RRC) connection, or any other suitable connection. The example will be described with reference to a base station, however it will be appreciated that some or all of the steps may be performed by a network.

During a first connection, the UE may transmit connection measurement information, for example as connection measurement reports, to a base station which is connected to the network. During the first connection the BS may use such measurements to determine whether to improve the connection between the UE and network by any suitable method, which will be known to the skilled person. For example, the BS may activate a handover to a neighbouring cell, or activate dual connectivity or carrier aggregation.

The BS or network may transmit a release message (for example an RRC connection release message) to the UE. This message instructs the UE to enter into a low power state (otherwise referred to herein as a "low power mode"). Once the release message has been received at the UE, the UE transitions from a connected state to a low power state.

The UE and BS may each store some or all of the connection measurements which have been transmitted from the UE to the BS during the first connection as a first set of connection measurements. The BS may also store other measurements (e.g. of the signals received from the UE) related to the first connection. The connection measurement information may be stored once the connection has ended, for example when the release message is sent to the UE. In some examples, measurements may be stored which have been transmitted to BS from the UE during an indicated time. For example, the UE and/or base station may store measurements from the last 5 seconds of the first connection. The UE may receive a time indication from the base station which indicates the time from which the measurements should be stored by the UE. The UE may receive the time indication within the release message, or within another suitable message.

The connection measurement information may be stored at the UE and base station for a finite time duration. In some examples, the first connection measurement information may be stored until the second connection has been established. The time duration for storing the first set of connection measurement information may be communicated to the UE from the base station.

In some examples, the measurements made in the low power state and/or those made in the first connection may be statistically processed prior to being used to determine whether the first connection information is valid for the second connection. In some examples, the measurements made in the low power state may be measured during an unconnected mode (e.g. idle state or inactive state) and/or, when the UE is required to send data to the network and/or is paged. The UE may statistically process a set of the measurements (e.g. to calculate their average and/or standard deviation). Therefore, in examples described herein, the UE may use the statistically processed measurements to determine whether the first set of connection measurement information is valid for a second connection. The UE may receive an indication of a time window (for example within the release message) such that measurements measured in the low power state measured by the UE within the time window are averaged and used to determine whether the first set of connection measurement information is valid for a second connection. For example, measurements from the last 5 seconds of the low power state may be averaged at the UE prior to being compared with the last 5 seconds of connection measurement information from the first connection. The average measurements may be used to determine the average UE location, or RSRP, or RSRQ, or other measurement described herein. The results of the statistical processes may then be used when determining whether the first connection's set of measurement information is valid for a second connection.

The UE may store connection measurement information from certain frequencies and/or base stations. The UE may receive instructions indicating which information to store from the base station, e.g. the UE may receive instructions indicating one or more frequency bands or radio channels from which the connection measurement information should be stored. Such instructions may be received during the release message.

The BS may associate the first set of communication measurements with an identification number (which may be more generally referred to as an identifier, or an ID). In some examples the identification number associated with the UE may be provided by the base station, or the identification number may be provided to the UE and the base station by the core network.

The identification number be may any suitable identification. For example the identification number may be any one or more of: S1/NG connection reference; resume ID; or RNTI. Such identification numbers may be sent in the release message described herein (for example in an RRC Connection Release) or in other RRC signalling. In other examples, the identification number may be a core network temporary ID, such as 4G S-TMSI or 5G S-TMSI.

When in a low power state, the UE is not being used for communication, i.e. it is not in a RRC connected mode. For example, the UE may be in an inactive state or in an idle state. The UE is known to the network and can communicate with the network, but is not connected to a base station. In the low power state, the UE performs minimal activity in order to conserve power. The UE may wake up regularly to monitor paging messages and broadcast channels such that it can maintain the connectivity with the network. As described herein, the UE may measure certain measurements during the low power state, such as measuring one or more of: Reference Signal Received Power (RSRP); Reference Signal Received Quality (RSRQ); and signal-to-noise ratio (SNR). These measurements measured in the low power state may be intra-frequency or inter-frequency measurements, or may be inter-RAT (Radio Access Technology) measurements. These measurements measured in the low power state may additionally or alternatively include one or more measurements indicative of the location of the UE. For example, the measurements may include measurements from sensors on the UE, such as data from an accelerometer and/or barometer, or the UE's GNSS.

The connection measurement information for the first and/or second connections described herein may include any one or more of the measurements described in relation to the low power state. In other words, the connected mode measurements may be the same as the low power state measurements.

The UE may determine the validity of the measurements from the first connection based on a comparison with the low power state measurements. In other words, the UE may determine whether the connection measurement information have changed more than a certain amount between the first and second connections. A threshold may be defined, wherein if a certain measurement has changed less than the threshold amount, the particular measurement is valid. In another example, there is an upper limit of standard deviation above which the first connection measurement information is determined to not be valid for a second connection. Statistical information including the limit of standard deviation and/or a threshold may be transmitted to the UE during the Release message, or during a separate message before the UE enters the low power state, or by information broadcast by the cell to the UE (e.g. while the UE is in a low power state).

In some examples, the UE may determine that it has moved more than a certain amount since the first connection ended, e.g. more than 10cm or more than 50cm. In this case, the UE may determine that the first set of communication measurements are not valid as the UE's location has changed more than a predefined amount. In this case the UE may decide not to compare any one or more of: Reference Signal Received Power (RSRP); Reference Signal Received Quality (RSRQ); and/or signal-to-noise ratio (SNR). In other examples, the UE may compare one or more of Reference Signal Received Power (RSRP); Reference Signal Received Quality (RSRQ); and/or signal-to-noise ratio (SNR) with those of the earlier measurements to determine whether the first connection measurement information are still valid.

The UE transmits a validation signal (which may also be referred to as a "validation message") to the BS indicating whether the first set of communication measurements are valid for the second connection between the UE and BS. The validation signal may include the identification number such that the BS can retrieve the correct stored measurement information. This is advantageous in the situation in which the BS is storing multiple connection measurement information, e.g. for multiple UEs.

The validation signal may be provided by the UE in any of the messages which are used during the connection establishment process. For example, the validation signal may be provided in any of the PRACH request, RRC Setup Request, RRC Setup Complete, or Security Mode Complete. Therefore, in some examples the validation signal may be provided in any of the messages which are used for the connection establishment, or may be provided in messages which are used after establishing a connection.

The message types described above have their usual definition found in the state of the art, and the inclusion of the validation signal can be provided within such messages using any suitable method.

If the connection measurement information from the first connection is valid for the second connection, the BS may provide the UE with a configuration (e.g., a mobility related configuration) without having to wait for the UE to send integrity protected measurement reports to the BS (e.g., it can be sent immediately (or promptly) after the Security Mode Command has been received by the BS). For example, this configuration may include one or more of: instructions for configuring and/or activating carrier aggregation; instructions for configuring and/or activating dual connectivity; instructions for setup of conditional handover targets; a handover command for immediate handover. This handover may be Layer 3 (L3) or Layer 1 (L1) handover. Layer 1 handover may involve a Physical Downlink Control Channel (PDCCH) order or MAC CE (Control Element) for Downlink/Uplink synchronization.

If it is determined that the connection measurement information from the first connection is not valid for the second connection, the connection between the UE and base station may be established in the conventional way known to the skilled person, which will not be referred to in detail here.

Any of the methods described herein may be implemented as a computer program. The computer program may be configured to control a network node or entity to perform any method according to the disclosure. A controller, server or network node of a cellular network may also be provided, configured to operate in accordance with certain methods disclosed herein. For example, the controller, server or network node may include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment (or aspect) or with reference to multiple embodiments (or aspects) are also provided, even if that combination has not been explicitly detailed herein.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

## Claims

1. A method for determining connection measurement information for use in a connection between a user equipment, UE, and a network comprising:
communicating, from the network to the UE, a release message configured to instruct the UE to enter a low power state; and
communicating a validation signal from the UE to the network, wherein the validation signal indicates whether connection measurement information from a first connection is valid for a second connection.

2. The method of claim 1 comprising, prior to communicating a validation signal, determining, at the UE, whether connection measurement information from the first connection is valid for a second connection.

3. The method of claim 2 wherein the determining step comprises comparing some connection measurement information from the first connection with one or more measurements from the low power state.

4. The method of claim 3 wherein the measurements measured during the low power state include one or more of: Reference Signal Received Power, RSRP; Reference Signal Received Quality, RSRQ; signal-to-noise ratio, SNR; and measurements indicative of the UE's location.

5. The method of claims 3 or 4 wherein some or all of the measurements measured during the low power state are statistically processed prior to being compared to some of the first connection's measurement information.

6. The method of any preceding claim wherein the release message includes information on a time period , such that the UE stores connection measurement information, of the first connection, made during that time period.

7. The method of any preceding claim wherein the release message indicates:
the form of statistical processing for performing on the measurements, by the UE; and/or
the mechanism by which the UE determines if measurements from the first connection are valid for use in the second connection.

8. The method of any preceding claim further comprising communicating, within the release message, an identification number associated with the UE.

9. The method of claims 8 wherein the identification number is a Temporary Mobile Subscriber Identity (TMSI) or Radio Network Temporary Identifier (RNTI).

10. The method of any preceding claim wherein the validation signal is communicated from the UE to the network within any one of the following signalling procedures: PRACH request; RRC Setup Request; RRC Setup Complete; or Security Mode Complete.

11. The method of any preceding claim further comprising, if the connection measurement information from a first connection is valid for the second connection, communicating a mobility related configuration from the network to the UE.

12. The method of claim 11 wherein the mobility related configuration comprises one or more of: instructions for configuring and/or activating carrier aggregation; instructions for configuring and/or activating dual connectivity; instructions for setup of conditional handover targets; a handover command for immediate handover.

13. The method of any preceding claim wherein the low power state is an idle state or an inactive state.

14. A user equipment, UE, configured to perform the method of any preceding claim.

15. A computer program comprising instructions that, when executed on a processor, cause the processor to perform the method of any of claims 1 to 13.
